# EUROPÄISCHE PATENTSCHRIFT

(11) **EP 1 364 817 B1**
(45) Veröffentlichungstag und Bekanntmachung des Hinweises auf die Patenterteilung: **21.06.2006**
(21) Anmeldenummer: 03010735.3
(22) Anmeldetag: 14.05.2003
(51) Int. Cl.: B60G 7/00, B62D 65/00

(54) **Einstückiger Federlenker**
One-piece suspension arm
Bras de suspension monopièce

(30) Priorität: 22.05.2002 DE 10223036; 06.09.2002 DE 10241406
(43) Veröffentlichungstag der Anmeldung: 26.11.2003
(73) Patentinhaber: NORSK HYDRO ASA, 0257 Oslo (NO)
(72) Erfinder: Günther, Stefan, 53783 Eitorf (DE); Haase, Jens, 53123 Bonn (DE)
(74) Vertreter: Cohausz & Florack

(56) Entgegenhaltungen:
- EP-A- 0 548 859
- EP-A- 0 913 277
- EP-A- 0 931 605
- WO-A1-02/058950
- DE-A- 4 322 632
- US-A- 5 662 349
- US-A- 5 673 929
- US-A- 5 884 722
- US-A- 6 098 437
- US-A- 6 135 498

## Beschreibung

Die Erfindung betrifft ein Verfahren zur Herstellung eines Federlenkers für das Fahrwerk eines Kraftfahrzeuges nach Anspruch 1 sowie einen Federlenker nach Anspruch 6.

Federlenker im Fahrwerk eines Kraftfahrzeuges dienen dazu, das Rad in einer oder mehreren Richtungen zu führen und dabei die Kräfte, die durch das Rad sowie Stoßdämpfer, Tragfeder und Karosserieaufbau in das Fahrwerk eingeleitet werden, abzustützen. Der Federlenker ist dabei ein Teil der ungefederten bzw. teilgefederten Masse des Fahrwerks, dessen Reduzierung den Fahrkomfort und/oder die Fahrdynamik deutlich verbessern. Um hohe Massen im Fahrwerk eines Kraftfahrzeuges zu vermeiden sowie um den vorhandenen Platz im Fahrwerk optimal auszunutzen, weisen Federlenker in der Regel eine sehr komplexe geometrische Form auf, um gleichzeitig die benötigte Steifigkeit zu gewährleisten.

Bisher bekannte Federlenker werden deshalb zumeist in einer Schalenbauweise aus mehreren Einzelteilen aus Aluminium- oder Stahlwerkstoffen gefertigt. Die Einzelteile werden dann durch Schweißen, Schrauben oder Stanznieten zu einem mehrteilig aufgebauten Federlenker zusammengefügt. Dabei weist ein in einer Schalenbauweise hergestellter, mehrteiliger Federlenker den Nachteil auf, dass beispielsweise beim Zusammenfügen der Einzelteile durch Schweißen aufgrund des hohen Wärmeeintrages Gefügeveränderungen im Federlenker erzeugt werden, welche die Festigkeit negativ beeinflussen können. Bei der Herstellung solcher Federlenker sind für die verschiedenen Einzelteile darüber hinaus zusätzliche Werkzeuge, beispielsweise Tiefziehwerkzeuge, notwendig so dass nicht nur ein höherer logistischer Aufwand durch die Steuerung der verschiedenen Einzelteile in der Fertigung notwendig ist, sondern auch zusätzliche Werkzeugkosten entstehen. Weiter ist dabei problematisch, dass, neben dem zusätzlichen Fertigungsaufwand durch das notwendige Fügen der Einzelteile, die Einzelteile nur besonders kleine Toleranzen aufweisen dürfen, um zu einem maßgenauen Federlenker zusammengefügt zu werden.

Alternativ dazu sind Federlenker aus Strangpressprofilen aus Aluminiumwerkstoffen bekannt. Allerdings weisen die stranggepressten Profile nur geringe Freiheitsgrade bezüglich der Formgebung auf, so dass eine optimale Anpassung an den zur Verfügung stehenden Bauraum im Kraftfahrzeug nicht gewährleistet werden kann.

Des weiteren können Federlenker als Schmiedeteile aus Aluminium- oder Stahlwerkstoffen oder als Gussteile aus Aluminiumwerkstoffen hergestellt werden. Allerdings ist auch bei den letztgenannten Federlenkern entweder die Anzahl der Fertigungsschritte bis zur Herstellung des fertigen Federlenkers zu hoch (Schmiedeteil) oder die Freiheitsgrade bei der Formgebung unbefriedigend (Gussteil).

Darüber hinaus sind aus den deutschen Offenlegungsschriften DE 190 07 192 Al und DE 100 07 193 Al Querlenker für Kraftfahrzeuge bekannt, die aus einem unter Verwendung des Innenhochdruckumform (IHU)-Verfahren umgeformten Edelstahlrohr hergestellt sind. Zusätzlich ist aus der europäischen Patentschrift EP 0 814 998 B1 auch die Verwendung von rohrförmigen Halbzeugen aus einer Aluminiumlegierung für die Herstellung von Querlenkern unter Verwendung des IHU-Verfahrens bekannt. Hinweise auf eine entsprechende Herstellung von Federlenkern können den oben genannten Dokumenten allerdings nicht entnommen werden.

US-A-5 673 929, das als nächstliegender Stand der Technik angesehen wird, offenbart ein Herstellungsverfahren nach dem Oberbegriff des Anspruch 9 und einen mit diesem Verfahren hergestellten Federlenker. Weiterhin zeigt DE-A-4 322 632 eine hydrogeformte Verbindungsstrebe und US-A-6 135 490 eine hydrogeformte Federbeinaufnahme.

Ausgehend von dem zuvor beschriebenen und hergeleiteten Stand der Technik liegt der vorliegenden Erfindung die Aufgabe zugrunde, ein vereinfachtes Verfahren zur Herstellung eines Federlenkers für das Fahrwerk eines Kraftfahrzeuges und einen entsprechenden Federlenker zur Verfügung zu stellen.

Der Federlenker wird unter Verwendung eines Innenhochdruckumform-Verfahrens aus einem Rohrhalbzeug hergestellt. Als Rohrhalbzeuge kommen dabei beliebig geformte aus Aluminium, bestehende Rohrhalbzeuge in Betracht. Mit Hilfe des erfindungsgemäßen Verfahrens ist es möglich, eine komplexe Formgebung des Federlenkers mit sehr wenigen Verfahrensschritten zu realisieren. Insbesondere entfallen zusätzliche Fügeoperationen, wie sie bei mehrteiligen Federlenkern notwendig sind, so dass nicht nur der Aufwand zur Fertigung reduziert wird, sondern auch nachteilige Gefügeveränderungen am Bauteil, beispielsweise durch Schweißen, vermieden werden.

Ein besonders gutes Verhältnis zwischen Festigkeit und Gewicht wird, gemäß dem erfindungsgemäßen Verfahren, dadurch erreicht, dass als Rohrhalbzeuge stranggepresste oder längsnahtgeschweißte Aluminiumrohre verwendet werden. Insbesondere durch die Verwendung von längsnahtgeschweißten Aluminiumrohren steht ein kostengünstig zu produzierendes Rohrhalbzeug mit sehr guten Umformeigenschaften zur Verfügung.

Die Präzision des erfindungsgemäßen Federlenkers wird dadurch weiter gesteigert werden, dass der Federlenker nach dem Innenhochdruckumformen formkalibriert wird.

Gemäß dem erfindungsgemäßen Verfahrend werden während des Formkalibrierens oder nach dem Formkalibrieren, insbesondere beim Ausformen, die Enden des Federlenkers zum Anflanschen von Verbindungselementen beschnitten, dadurch können auf einfache Weise Radträger oder auch Hilfsrahmen am Federlenker angeflanscht werden. Weitere Fahrwerksteile wie z.B. Zugstreben etc. lassen sich ebenfalls durch das Vorsehen von Bohrungen oder Anflanschgeometrien an den Federlenker anflanschen.

Das formschlüssige Anflanschen von Verbindungselementen wird dadurch weiter erleichtert, dass beim Beschneiden eine zumindest partiell offene Kontur, insbesondere eine Schalen- oder Laschenkontur, in den Federlenker eingebracht wird. Mit dieser Maßnahme wird auch auf geometrische Beschränkungen des vorhandenen Bauraumes eingegangen, indem man ebenfalls Teile des Federlenkerinnenvolumens als Bauraum für angeflanschte Fahrwerksteile wie z.B. Fahrzeugfedern (Auswirkung der Blocklänge der Federn auf Bauraumbedarf, Underflor Axle Principle) aushutzbar macht.

Wird, gemäß einer nächsten weitergebildeten Ausführungsform des erfindungsgemäßen Verfahrens, in das Rohrhalbzeug durch Innenhochdruckumformen eine geschlossene Hohlkammerkontur eingebracht, so kann eine belastungsgerechte Bauteilstruktur erzeugt werden, welche den zur Verfügung stehenden Bauraum im Fahrwerk des Kraftfahrzeuges optimal ausnutzt.

Die Aufnahme von breiten Anbauteilen, beispielsweise Tragfederkonturen, gewährleistet eine nächste weitergebildete Ausführungsform des erfindungsgemäßen Verfahrens, in dem beim Innenhochdruckumformen der Rohrquerschnitt über seine Längssachse zumindest teilweise in eine Rechteck- oder Vieleckform gebracht wird. Hierdurch und durch Ausbilden von Profilecken wird das partiell benötigten Flächenwiederstandsmoment über den Querschnitt bereitstellt.

Darüber hinaus kann die Steifigkeit des Federlenkers weitergesteigert werden, in dem, gemäß einer bevorzugt weitergebildeten Ausführungsform des erfindungsgemäßen Verfahrens, beim Innenhochdruckumformen versteifende Elemente, insbesondere Sicken und Profilierungen, in Längs- oder Querrichtung in die Kontur des Federlenkers eingebracht werden. Dabei wird das Einbringen der Versteifungselemente mit Hilfe von Schiebern in einem Innenhochdruckumform-Werkzeug realisiert.

Weitere Fertigungsschritte können gemäß einer nächsten Ausführungsform des erfindungsgemäßen Verfahrens, dadurch eingespart werden, dass während des Innenhochdruckumformens oder nach dem Innenhochdruckumformen Bohrungen und Lochungen in den Federlenker eingebracht werden. Bevorzugt werden die Lochungen beim Ausformen des Federlenkers, d.h. noch im Innenhochdruckumform-Werkzeug, durchgeführt.

Gemäß der Erfindung nach Anspruch 6 ist der Federlenker zumindest im wesentlichen einstückig Einstückige Federlenker gewährleisten dabei, dass zum einen aufgrund des Verzichts auf Fügeoperationen, beispielsweise einem Schweißen, nachteilige Gefügeänderungen am Federlenker durch hohen Wärmeeintrag vermieden werden und zum anderen, dass der Fertigungsaufwand, beispielsweise durch den Wegfall der Fügeoperationen, verringert wird.

Durch einen einteiligen Federlenker wird kein herkömmlicher Fügeflansch benötigt, der durch Materialdopplung Mehrgewicht verursachen könnte oder Steifigkeitssprünge verursacht.

Besteht der Federlenker aus einem unter Verwendung des Innenhochdruckumform-Verfahrens umgeformten, längsnahtgeschweißten oder stranggepressten Aluminiumrohr, so kann ein Federlenker mit einem optimierten Verhältnis von Festigkeit und Masse zur Verfügung gestellt werden.

Insbesondere wird den unterschiedlichen Geometrien der Verbindungselemente des Fahrwerks eines Kraftfahrzeuges Rechnung getragen sowie das formschlüssige Anflanschen der Verbindungselemente erleichtert indem der Federlenker zumindest partiell eine offene Kontur, insbesondere eine Schalen- oder Laschenkontur, aufweist.

Auf besonders einfache Art und Weise können breite Anbauteile, beispielsweise Tragfederkonturen, gemäß einer nächsten vorteilhaften Ausführungsform des erfindungsgemäßen Federlenkers aufgenommen werden, indem der Federlenker zumindest teilweise eine Rechteck- oder Vieleckform aufweist. Der Federlenker kann beispielsweise durch eine Profilverschiebung über den Längsachsenverlauf an der benötigten Stelle breiter sein als an den Federlenkerenden, zudem kann durch Aufweiten des Rohres im IHU-Prozess zusätzlicher Umfang für eine genügend breite Aufnahmegeometrie geschaffen werden.

Sind Bohrungen und Lochungen vorgesehen, so ist es gemäß einer weitergebildeten Ausführungsform des erfindungsgemäßen Federlenkers, möglich, Verbindungselemente am Federlenker auf einfache Weise zu befestigen. Anbauteile wie Abdeckungen zum Steinschlagschutz oder Unterbodenabdeckungen zur Minimierung/Optimierung des Luftwiderstands können ebenfalls durch Vorsehen einer Bohrung, die beispielsweise als Einrasthilfe gestaltet ist, befestigt werden.

Ein weiter verbessertes Kraftaufnahmevermögen bei nahezu gleichbleibendem Gewicht gewährleistet eine nächste bevorzugte Ausführungsform des erfindungsgemäßen Federlenkers, in dem versteifende Elemente, insbesondere Sicken und Profilierungen, im Längs- oder Querverlauf des Federlenkers vorgesehen sind. Weiter können die Enden des Federlenkers durch Ausbildung von Kragen versteift werden.

Es gibt nun eine Vielzahl von Möglichkeiten, dass erfindungsgemäße Verfahren zur Herstellung eines Federlenkers und den erfindungsgemäßen Federlenker auszugestalten und weiterzubilden. Hierzu wird einerseits verwiesen auf die den Patentansprüchen 1 und 10 nachgeordneten Patentansprüchen, andererseits auf die Beschreibung eines Ausführungsbeispiels in Verbindung mit der Zeichnung. In der Zeichnung zeigt
- Fig. 1:: die 3D-Ansicht eines ersten Ausführungsbeispiels eines unter Verwendung des IHU-Verfahrens umgeformten Federlenkers vor dem Ausformen und
- Fig. 2:: die 3D-Ansicht des ersten Ausführungsbeispiels eines erfindungsgemäßen Federlenkers nach dem Ausformen aus dem Innenhochdruckumform-Werkzeug.

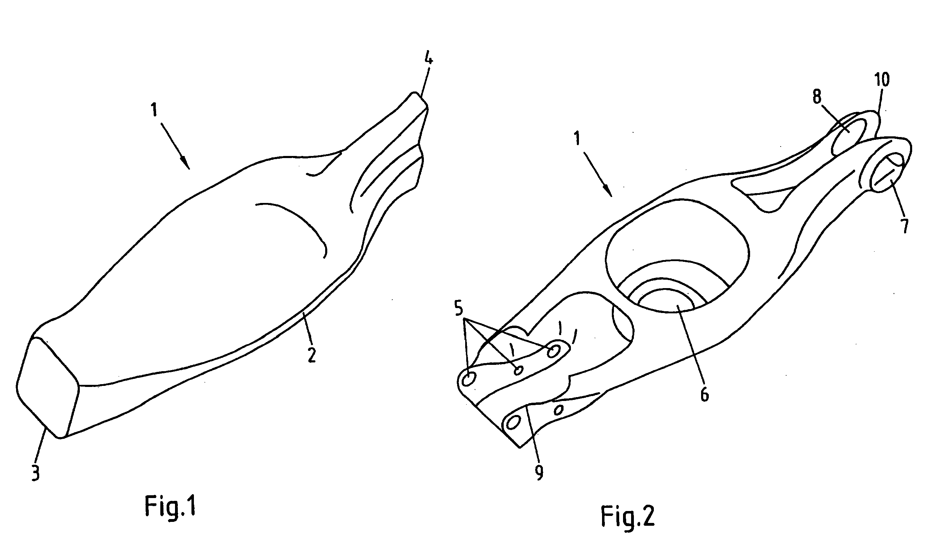

Fig. 1 zeigt ein erstes Ausführungsbeispiel eines erfindungsgemäßen Federlenker 1, welcher unter Verwendung des IHU-Verfahrens beispielsweise aus einem längsnahtgeschweißten Aluminiumrohr geformt ist. Allerdings ist, obwohl nicht erfindungs gemäß, auch der Einsatz rohrförmiger aus einem im Innenhochdruckverfahren umformbaren Metall, beispielsweise Stahl, einer Stahllegierung oder andere Metalllegierung, bestehender Halbzeuge vorstellbar.

Wie in Fig. 1 deutlich zu erkennen ist, wird beim IHU-Verfahren das rohrförmige Halbzeug zunächst in eine belastungsgerechte, geschlossene Hohlkammerstruktur umgeformt. Dabei können nahezu beliebige Geometrien hergestellt werden, sodass der gesamte für den Federlenker 1 zur Verfügung stehende Bauraum im Fahrwerk des Kraftfahrzeuges ausgenutzt werden kann und gleichzeitig spezifische Belastungen des Federlenkers 1 berücksichtigt werden können. Beispielsweise wird durch den breit ausgeformten mittleren Bereich 2 des Federlenkers 1 die Festigkeit bei Knickbeanspruchungen senkrecht zur Längsachse des Federlenkers 1 stark verbessert.

Darüber hinaus können, wie Fig. 1 zeigt, die Enden 3, 4 des Federlenkers 1 an die Anbindung unterschiedlicher Verbindungselemente angepasst werden. Dabei ist es beispielsweise auch möglich, nicht dargestellte Sicken und Profilierungen in den Körper des Federlenkers beim Innenhochdruckumformen einzubringen, so dass die Festigkeit in Bezug auf Knickbeanspruchungen weitergesteigert werden kann.

Fig. 2 wiederum zeigt das erste Ausführungsbeispiel eines erfindungsgemäßen Federlenkers 1 nach dem Ausformen aus dem Innenhochdruckumform-Werkzeug. Der Federlenker 1 weist nun Bohrungen 5, Lochungen 6, 7 und 8 sowie eine laschenartige offene Konturen 9, 10 im Bereich der Enden des Federlenkers 1 auf. Die Bohrungen 5 sowie die Lochungen 6 bis 8 werden dabei ebenso wie die laschenartigen Konturen 9 und 10 im Bereich der Enden des Federlenkers 1 durch Beschnittoperationen beim Ausformprozess hergestellt. Wie Fig. 2 weiter zeigt, können Federlenker 1 auch mit sehr komplexen Strukturen mittels des erfindungsgemäßen Verfahrens einstückig hergestellt werden. Hieraus resultiert nicht nur eine größere Freiheit in der Konstruktion derartiger Federlenker 1, gleichzeitig wird bei Verwendung eines längsnahtgeschweißten Aluminiumrohres ein minimales Gewicht erzielt.

## Patentansprüche

1. Verfahren zur Herstellung eines im Wesentlichen einstückigen Federlenkers für das Fahrwerk eines Kraftfahrzeuges, bei welchem der Federlenker unter Verwendung eines Innenhochdruckumform-Verfahrens aus einem Rohrhalbzeug hergestellt wird und als Rohrhalbzeuge stranggepresste oder längsnahtgeschweißte Aluminiumrohre verwendet werden, **dadurch gekennzeichnet , dass** der Federlenker nach dem Innenhochdruckumformen formkalibriert wird, während des Formkalibrierens oder nach dem Formkalibrieren, insbesondere beim Ausformen, die Enden des Federlenkers zum Anflanschen von Verbindungselementen beschnitten werden und beim Beschneiden zumindest partiell eine offene Kontur, insbesondere eine Schalen- oder Laschenkontur, in den Federlenker eingebracht wird, so dass Teile des Federlenkerinnenvolumens als Bauraum für angeflanschte Fahrwerksteile nutzbar sind.

2. Verfahren nach Anspruch 1, **dadurch gekennzeichnet, dass** in das Rohrhalbzeug durch Innenhochdruckumformen eine geschlossene Hohlkammerkontur eingebracht wird.

3. Verfahren nach einem der Ansprüche 1 bis 2, **dadurch gekennzeichnet, dass** während des Innenhochdruckumformens der Rohrquerschnitt über seine Längsachse zumindest teilweise in eine Rechteck- oder Vieleckform gebracht wird.

4. Verfahren nach einem der Ansprüche 1 bis 3,
**dadurch gekennzeichnet, dass** während des Innenhochdruckumformens versteifende Elemente, insbesondere Sicken und Profilierungen, in Längs- oder Querrichtung in die Kontur des Federlenkers eingebracht werden.

5. Verfahren nach einem der Ansprüche 1 bis 4,
**dadurch gekennzeichnet, dass** während des Innenhochdruckumformens oder nach dem Innenhochdruckumformen Bohrungen und Lochungen in den Federlenker eingebracht werden.

6. Federlenker für das Fahrwerk eines Kraftfahrzeuges, hergestellt mit einem Verfahren gemäß Anspruch 1 bis 5, wobei der Federlenker (1) zumindest im wesentlichen einstückig ist und im wesentlichen aus einem unter Verwendung des Innenhochdruckumform-Verfahrens umgeformten, längsnahtgeschweißten oder stranggepressten Aluminiumrohr besteht,
**dadurch gekennzeichnet, dass** der Federlenker (1) zumindest partiell eine offene Kontur (9,10), insbesondere eine Schalen- oder Laschenkontur, aufweist, so dass Teile des Federlenkerinnenvolumens als Bauraum für angeflanschte Fahrwerksteile nutzbar sind.

7. Federlenker nach Anspruch 6,
**dadurch gekennzeichnet, dass** der Federlenker (1) zumindest teilweise eine Rechteck- oder Vieleckform aufweist.

8. Federlenker nach einem der Ansprüche 6 oder 7,
**dadurch gekennzeichnet, dass** Bohrungen (5) und/oder Lochungen (6,7,8) im Federlenker (1) vorgesehen sind.

9. Federlenker nach einem der Ansprüche 6 bis 8,
**dadurch gekennzeichnet , dass** versteifende Elemente, insbesondere Sicken und Profilierungen, im Längs- oder Querverlauf des Federlenkers (1) vorgesehen sind.

## Claims

1. A method for manufacturing an essentially one-piece spring suspension arm for the suspension of a motor vehicle, in which the spring suspension arm is manufactured from a tubular blank using a hydroforming method and extruded or longitudinally welded aluminum tubes are used as the tubular blanks,
**characterized in that** the spring suspension arm is dimensionally calibrated after the hydroforming, during the dimensional calibration or after the dimensional calibration, in particular during removal from the mold, the ends of the spring suspension arm are cut to flange-mount connection elements, and an open contour, in particular a shell or clip contour, is at least partially introduced into the spring suspension arm during the cutting, so that parts of the spring suspension arm internal volume are usable as installation space for flange-mounted suspension parts.

2. The method according to Claim 1,
**characterized in that** a closed hollow chamber contour is introduced into the tubular blank through hydroforming.

3. The method according to one of Claims 1 through 2,
**characterized in that** the tube cross-section is at least partially brought into a rectangular or polygonal shape over its longitudinal axis during the hydroforming.

4. The method according to one of Claims 1 through 3,
**characterized in that** stiffening elements, in particular beads and profiles, are introduced into the contour of the spring suspension arm in the longitudinal or transverse direction during the hydroforming.

5. The method according to one of Claims 1 through 4,
**characterized in that** drilled holes and punched holes are introduced into the spring suspension arm during the hydroforming or after the hydroforming.

6. A spring suspension arm for the suspension of a motor vehicle, manufactured using a method according to Claims 1 through 5, the spring suspension arm (1) at least essentially being in one piece and essentially comprising a longitudinally welded or extruded aluminum tube reshaped using the hydroforming method, **characterized in that** the spring suspension arm (1) at least partially has an open contour (9, 10), particularly a shell or clip contour, so that parts of the spring suspension arm internal volume are usable as installation space for flange-mounted suspension parts.

7. The spring suspension arm according to Claim 6,
**characterized in that** the spring suspension arm (1) at least partially has a rectangular or polygonal shape.

8. The spring suspension arm according to one of Claims 6 or 7,
**characterized in that** drilled holes (5) and/or punched holes (6, 7, 8) are provided in the spring suspension arm (1).

9. The spring suspension arm according to one of Claims 6 through 8,
**characterized in that** stiffening elements, particularly beads and profiles, are provided in the longitudinal or transverse course of the spring suspension arm (1).

## Revendications

1. Procédure pour la fabrication d'un bras de suspension, essentiellement composé d'une pièce, pour le châssis d'un automobile dans lequel, le bras de suspension est fabriqué moyennant une méthode de déformation sous haute pression interne d'un produit de tuyau semi-ouvré et dans lequel sont utilisés, en tant que produits de tuyau semi-ouvré, des tuyaux en aluminium moulés ou qui ont une soudure longitudinale, **caractérisée en ce que** le bras de suspension est calibré postérieurement à la déformation sous haute pression interne ou lors du calibrage de la forme, ou postérieurement au calibrage de la forme, **en ce qu'**en particulier, pendant le moulage, les extrémités du bras de suspension sont coupées afin de fixer hermétiquement les éléments de connexion et, **en ce que**, pendant la coupe, du moins de façon partielle, un contour ouvert est introduit, en particulier un contour en forme de revêtement ou de languette, pour que les parties du volume intérieur du bras de suspension puissent être utilisées comme espace de fabrication pour les parties du châssis démontées.

2. Procédure selon la première revendication, **caractérisée en ce que** le produit de tuyau semi-ouvré est introduit moyennant la déformation sous haute pression interne dans un contour de chambre creuse.

3. Procédure selon une des revendications 1 ou 2 **caractérisée en ce que** la coupe transversale du tuyau est formée dans son axe longitudinal, au moins de façon partielle, afin d'acquérir une forme de rectangle ou une forme d'angle multiple.

4. Procédure selon une des revendications 1 à 3 **caractérisée en ce que** des éléments, en particulier des moulures et des profils sont introduits en direction longitudinale et transversale pendant la déformation sous haute pression interne dans le contour du bras de suspension.

5. Procédure selon une des revendications 1 à 4, **caractérisée en ce que** des orifices et des perforations sont réalisées dans le bras de suspension pendant la déformation sous haute pression ou postérieurement à la déformation sous haute pression.

6. Bras de suspension pour le châssis d'un automobile fabriqué à partir des revendications 1 à 5, dans lequel le bras de suspension (1) est, au moins, essentiellement formé en une seule pièce et est essentiellement constitué par un tuyau en aluminium de soudure longitudinale ou moulé moyennant la méthode de déformation sous haute pression interne, **caractérisé en ce, que** le bras de suspension (1) compte, au moins de façon partielle, avec un contour couvert (9, 10), en particulier un contour de revêtement ou de languette afin que les parties du volume intérieur du bras de suspension puissent être utilisées dans l'espace de fabrication pour les parties du châssis démontées.

7. Bras de suspension selon la revendication 6, **caractérisé en ce que** le bras de suspension (1) compte, au moins de façon partielle, avec une forme de rectangle ou d'angle multiple.

8. Bras de suspension selon une des revendications 6 ou 7, **caractérisé en ce que** les orifices (5) et/ ou les perforations (6, 7, 8) sont prévues à l'intérieur du bras de suspension (1).

9. Bras de suspension selon une des revendications 6 à 8, **caractérisé en ce que** les éléments de renfort, en particulier, les moulures et les profils, sont prévus suivant la direction longitudinale et transversale du bras de suspension (1).
